# EUROPEAN PATENT SPECIFICATION

(11) **EP 1 869 426 B1**
(45) Date of publication and mention of the grant of the patent: **16.02.2011**
(21) Application number: 06739914.7
(22) Date of filing: 29.03.2006
(51) Int. Cl.: G01M 11/00, B29C 59/10, B05D 3/14, B29D 11/00

(54) **METHODS OF INSPECTING OPHTHALMIC LENSES**
VERFAHREN ZUM UNTERSUCHEN VON BRILLENLINSEN
PROCEDES D'INSPECTION DE LENTILLES OPHTALMIQUES

(30) Priority: 31.03.2005 US 666929 P
(43) Date of publication of application: 26.12.2007
(73) Proprietor: Johnson and Johnson Vision Care, Inc., Jacksonville, FL 32256 (US)
(72) Inventor: WATTERSON, JR., Robert J., Jacksonville, FL 32259 (US); ADAMS, Jonathan P., Jacksonville, FL 32256 (US)
(74) Representative: Tunstall, Christopher Stephen
(86) International application number: PCT/US2006/011444
(87) International publication number: WO 2006/105183

(56) References cited:
- EP-A- 0 686 842
- EP-A- 0 819 724
- GB-A- 1 579 002
- US-A- 3 914 521
- US-B1- 6 261 403

## Description

This invention related to methods for manufacturing ophthalmic lenses.

### RELATED APPLICATIONS

This application is a non-provisional filing of U.S. Serial No. 60/666,929, filed on March 31, 2005, a provisional patent application.

### BACKGROUND

Contact lenses have been used commercially to improve vision since the 1950s. The first contact lenses were made of hard materials, glass and hard plastics. These lenses were manufactured by processes that include their physical inspection by humans. Later developments in the field gave rise to soft contact lenses, based upon hydrogels, which are extremely popular today. Hydrogels are hydrated crosslinked polymeric systems that contains water in an equilibrium state. Hydrogels typically are oxygen permeable and biocompatible, making them preferred materials for producing biomedical devices and in particular contact or intraocular lenses. Due to the comfort and popularity of these lenses, the lenses are now manufactured on a large scale by automated processes that include the automatic inspection of contact lenses. The automatic inspection of ophthalmic lenses using the image of the lens is known. See, U.S. Pat. Nos. 3,794,429; 3,807,867; 3,969,023; 3,988,068; 4,035,082; 5,500,732; 5,528,357; 5,574,554; 5,627,638; 5,633,504; 5,640,464; 5,717,781; 5,719,669; 5,745,230; 5,748,300; 5,801,822; 5,805,276; 5,812,254; 5,818,573; 5,828,446; 5,995,213; 6,047,082; 6,134,342; 6,154,274; 6,301,005; 6,633,377; and 6,822,016; and U.S. Pat. Pub. Nos. 2003/0112426; 2004/0042003; 2004/0008877; 2004/0004693; and 2003/0103201; and document EP0686842 A. See Automatic lens inspection systems ("ALI Systems") identify, tears, chips, holes, and other edge defects in soft contact lenses in a rapid manner, typically at the speed of less than thirty seconds per lens. Many of these systems require the inspection of lenses in a liquid, such as processing solutions, packaging solutions and the like. In some instances the liquid can appear to the ALI System as a contact lens, this is particularly true if the liquid unevenly coats, or bubbles up on the surface of the container that holds the liquid and the lens to be inspected.

Since the inspection process is so rapid, often the ALI Systems fail lenses that do not contain defects where they are enclosed in liquid droplets. Although not wishing to be bound by a particular mechanism, it is believed that the systems confuse the shadow cast by the liquid droplet as a defect. This results in wasted product. It would be beneficial if methods were developed that reduced the confusion to ALI Systems between actual defects in contact lenses and the liquids surrounding those lenses. This need is met by the following invention.

### BRIEF DESCRIPTION OF THE DRAWINGS

Fig. 1 Illustrates an untreated blister bowl with deionized water and a contact lens.
Fig. 2 Illustrates a treated blister bowl, with deionzed water and a contact lens.
Fig. 3 Illustrates an image of treated and untreated blister bowls and deionized water, as seen by an ALI System.
Fig. 4 Illustrates an image of a treated and untreated blister bowls, contact lenses and deionized water, as seen by an ALI System.

### DETAILED DESCRIPTION OF THE INVENTION

This invention includes a method of inspecting an ophthalmic lens in a container, wherein said ophthalmic lens is submersed in a liquid comprising, consisting of, consisting essentially of,
treating the inner surface of said container with an electrical charge of adequate power, for a sufficient period of time prior to adding said liquid or said ophthalmic lens to said container;
adding said liquid and said ophthalmic lens to the container; and inspecting said ophthalmic lens.

As used herein "ophthalmic lens" refers to a device that resides in or on the eye. These devices can provide optical correction or may be cosmetic.

The term ophthalmic lens includes but is not limited to soft contact lenses, intraocular lenses, overlay lenses, ocular inserts, and optical inserts. Preferred lenses of the invention are soft contact lenses are made from silicone elastomers or hydrogels, which include but are not limited to silicone hydrogels, and fluorohydrogels. Soft contact lens formulations are disclosed in US Patent No. 5,710,302, WO 9421698, EP 406161, JP 2000016905, U.S. Pat. No. 5,998,498, US Pat. App. No. 09/532,943, U.S. Patent No. 6,087,415, U.S. Pat. No. 5,760,100, U.S. Pat. No.5,776, 999, U.S. Pat. No. 5,789,461, U.S. Pat. No. 5,849,811, U.S. Pat. No. 5,965,631, and silicone hydrogels as prepared in U.S. Pat. No. 5,998,498, US Pat. App. No. 09/532,943, a continuation-in-part of US Pat App. No. 09/532,943, filed on August 30, 2000, U.S. Pat. App. No. 60/318,536, entitled Biomedical Devices Containing Internal wetting Agents," filed on September 10, 2001 and its non-provisional counterpart of the same title, U.S. Serial No. 10/236,538, filed on September 6, 2002, U.S. Patent No. 6,087,415, U.S. Pat. No. 5,760,100, U.S. Pat. No.5,776, 999, U.S. Pat. No. 5,789,461, U.S. Pat. No. 5,849,811, and U.S. Pat. No. 5,965,631.

The particularly preferred lenses of the inventions are etafilcon A, galifilcon A, senofilcon A, lenefilcon A, lotrifilcon A, lotrifilcon B, balifilcon A, polymacon, genfilcon A, lenefilcon A, bafilcon, acofilcon A acquafilcon A, alofilcon A alphafilcon A, amifilcon A, astifilcon A, atalafilcon A, bisfilcon A bufilcon A, crofilcon A, cyclofilcon A, darfilcon A deltafilcon A, deltafilcon B, dimefilcon A, drooxifilcon A, epsifilcon A, esterifilcon A, focofilcon A, galyfilcon A, govafilcon A, hefilcon A hefilcon B, hefilcon D, hilafilcon A, hilafilcon B, hixoifilcon A, hioxifilcon B, hioxifilcon C, hydrofilcon A, licryfilcon A, licryfilcon B, lidofilcon B, lidofilcon A, mafilcon A, mesifilcon A, methafilcon B, mipafilcon A, nelfilcon A, netrafilcon A, ocufilcon A, ocufilcon B, ocufilcon C, ocufilcon D, ocufilcon E, ofilcon A, omafilcon A, oxyfilcon A, pentafilcon A, perfilcon A, pevafilcon A, phemfilcon A, , silafilcon A, siloxyfilcon A, tefilcon A, tetrafilcon A, trifilcon A, vifilcon A,or xylofilcon A. More particularly preferred lenses of the invention are etafilcon A, genfilcon A, galifilcon A, senofilcon A, lenefilcon A, lotrfilcon A, lotrifilcon B, and balifilcon A. The most particularly preferred lenses are galifilcon A and senofilcon A.

As used herein, "container" refers to any receptacle that houses an ophthalmic lens and a liquid. The preferred containers of the invention are the primary package for ophthalmic lenses, the blister package that has a bowl and and a foil laminate cover. Examples of primary packages are known. See, U.S. Patent Nos. 4,691,820; 5,054,610; 5,337,888; 5,375,698; 5,409,104; 5,467,868; 5,515,964; 5,609,246; 5,695,049; 5,697,495; 5,704,468; 5,711,416; 5,722,536; 5,573,108; 5,823,327; 5,704,468; 5,983,608; 6,029,808; 6,044,966; and 6,401,915 for examples of such packaging.

The particularly preferred container is a bowl that is made of polypropylene that is not covered by foil or any other sealant. The "inner surface" of the container is the surface that is adjacent to the ophthalmic lens.

As used herein, "liquid" refers to solutions that are used to wash, swell, store, sterilize, or hydrate ophthalmic lenses. Examples of liquids include but are not limited to water, deionized water, organic solutions, aqueous salt solutions, alcohols such as methanol, ethanol, isopropanol, t-amyl alcohol, methylene chloride, hexane, and diluents that are used in the production of ophthalmic lenses. Preferred diluents include organic solvents or water or mixtures hereof. Preferred organic solvents include alcohols, methylene chloride, hexanes, diols, triols, polyols and polyalkylene glycols. Examples include but are not limited to glycerin, diols such as ethylene glycol or diethylene glycol; boric acid esters of polyols such as those described in US Patents 4,680,336; 4,889,664 and 5,039,459; polyvinylpyrrolidone; ethoxylated alkyl glucoside; ethoxylated bisphenol A; polyethylene glycol; mixtures of propoxylated and ethoxylated alkyl glucoside; single phase mixture of ethoxylated or propoxylated alkyl glucoside and C₂₋₁₂ dihydric alcohol; adducts of ε-caprolactone and C₂₋₆ alkanediols and triols; ethoxylated C₃₋₆ alkanetriol; and mixtures of these as described in U.S. Pat. Nos. 5.457,140; 5,490,059, 5,490,960; 5,498,379; 5,594,043; 5,684,058; 5,736,409; 5,910,519. Diluents can also be selected from the group having a combination of a defined viscosity and Hanson cohesion parameter as described in U.S. Pat. No. 4,680,336. The preferred liquids are aqueous salt solutions, water, and deionized water. The most preferred liquids are water or deionzed water. Processing aids may be added to the liquids including surfactants such as Tween, methylcellulose, hydroxypropylmethylcellulose, carboxycellulose and the like, antibacterial agents, such as sliver nitrates, borates and the like. However, it is preferred that the liquids do not contain surfactants.

As used herein "electrical charge " refers the output of an electrical discharge unit that delivers an electric current through the air to the surface of the container. Often the electrical charge is delivered via an electrode (or other suitable delivery source) that is attached to the electrical discharge unit. While not wanting to be bound by any particular mechanism of action, it is believed that the electric current increases the surface energy of the container and improves the wettability of the treated surface. The preferred electrical discharge unit is a high frequency corona discharge unit that delivers an electrical charge having a power of about 50 Watts ("W") to about 1000 W, a voltage of about 5 kilovolts ("kV") to about 70 kV, and a frequency of about 20 kHz to about 30 kHz. The term "adequate power" refers to the wattage of the electrical charge that is applied to each container. The preferred adequate power is about 6.25 W to about 31.25 W, more preferably about 12.0 W to about 25 W, most preferably about 12.0 W to about 18.75 W.

As used herein the term "treating" refers to any method of imparting the electrical charge to the container. It is preferred that the output of the electrical discharge unit is placed about 0.1 mm to about 5.0 mm, preferably about 1.0 mm to about 4.0 mm, most preferably about 3 mm from the bottom of the inner surface of the container. In order for the electrical charge to be applied to the container, the container should be located between the output of the electrical charge (i.e. electrode) and a grounding source.

The phrase "sufficient period of time" refers to the time that the container is treated with the electrical charge. It is preferred that the sufficient period of time is about 0.25 second to about 10 seconds, more preferably about 0.5 seconds to about 3 seconds, more preferably about 0.5 second to about 1 second. Since the sufficient period of time, the adequate power and the distance to the output of the electrical charge may all vary, it is preferred that each container is treated with an electrical charge of at least about 12 W, for about 0.5 seconds, where the output of the electrical charge is about 3 mm from the inner surface of the bottom of the container.

As used herein, "inspecting" refers to the automatic inspection of ophthalmic lenses. It is preferred that this inspection be conducted on a manufacturing line by known methods prior sealing the ophthalmic lens in its primary package. See, U.S. Pat. Nos. US 5,640,464; 5,578,331; 5,500,732, and U.S. Pat. App. No. 10/371,712, filed on February 21, 2003.

The methods of this invention has among its benefits, the reduction of wasted material due to rejections of acceptable lenses.

In order to illustrate the invention the following examples are included. These examples do not limit the invention. They are meant only to suggest a method of practicing the invention. Those knowledgeable in the production of lenses as well as other specialties may find other methods of practicing the invention. However, those methods are deemed to be within the scope of this invention.

### Example 1

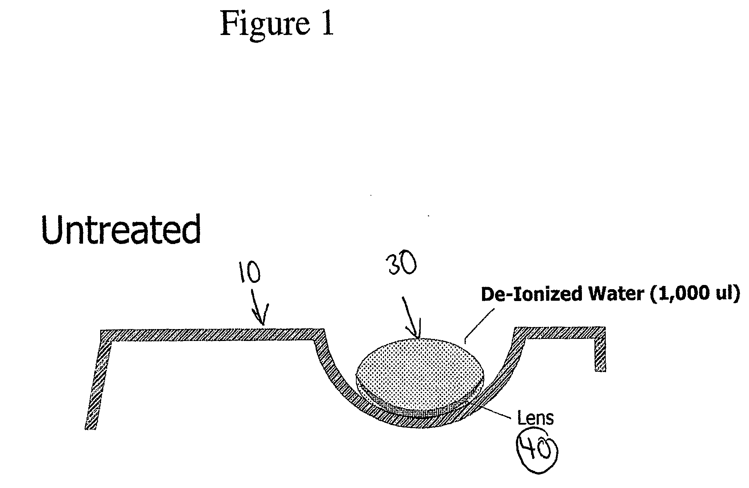

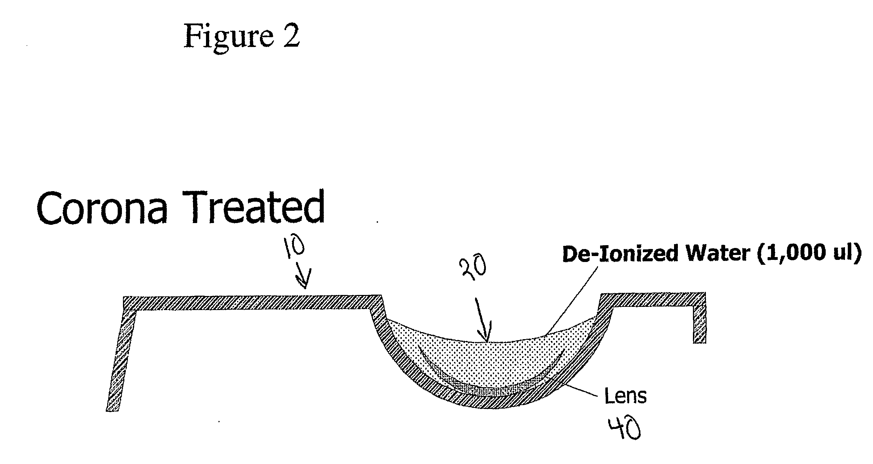

Senofilicon A contact lenses were prepared as described in example 1 U.S. Pat. No. 6,822,016. Electrodes from an electric discharge device manufactured by Tantec were placed over a number of bowls of blister packages (See, U.S. Pat. No. 5,467,868,) The electrical discharge unit emitted an electrical charge of 250 W (22 kV) that was divided over 16 packages allowing each package to receive 15.6 W over 1 second. A number of bowls were left untreated. The lenses were mechanically transferred to the treated and un-treated bowls and deionized water (1,000 µL) was added to the bowls. The lenses were visually evaluated to determine their physical appearance. The un-treated bowls appeared as depicted in Figure 1. This figure illustrates that when the deionized water was added to an un-treated bowl 10, the water forms a droplet 30 surrounding lens, 40. A treated bowl is depicted in Figure 2. This figure shows that water 20 added to bowl 10 spreads throughout the bowl and does not create a droplet around lens 30. Contact lenses that are enclosed in droplets often appear as damaged lenses when inspected by the methods of U.S. Pat. No. 5,578,331 ;and U.S. Pat. App. No. 10/371,712, filed on February 21, 2003.

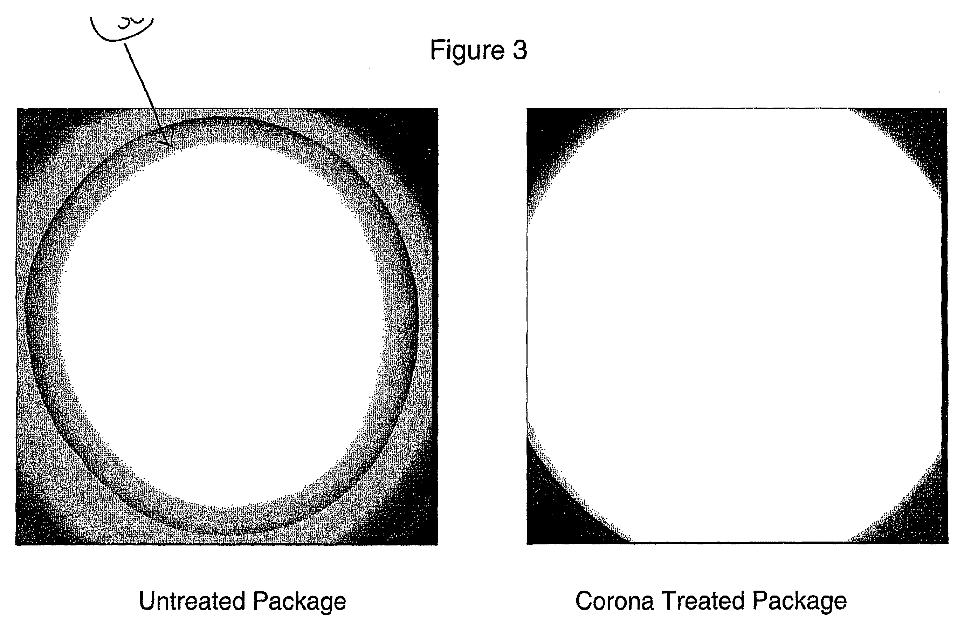

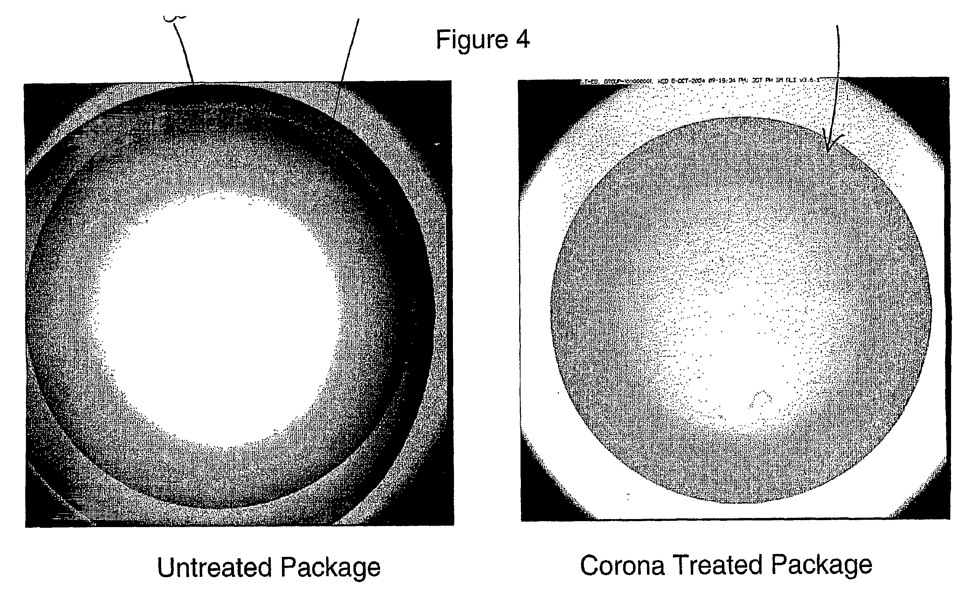

Figure 3 illustrates what is displayed by the automatic inspection system when treated an untreated packages without lenses are presented. From this figure, it is apparent that a water droplet 30 resembles lens 40 (see Fig. 4).

Figure 4 illustrates treated and un-treated packages containing a lens and deionized water. This figure illustrates that treated packages produce clear images where the only visible edge that shows is the edge of the contact lens 40.

## Claims

1. A method of inspecting an ophthalmic lens (40) in a container (10), wherein said ophthalmic lens is submersed in a liquid (20) comprising
adding said liquid and said ophthalmic lens to the container; and
inspecting said ophthalmic lens;
**characterized in that** the method comprises treating the inner surface of said container (10) with an electrical charge of adequate power, for a sufficient period of time prior to adding said liquid (20) or said ophthalmic lens (40) to said container (10).

2. The method of claim 1 wherein the ophthalmic lens is a soft contact lens.

3. The method of claim 2 wherein the contact lens is selected from the group consisting of etafilcon A, genfilcon A, galifilcon A, senofilcon A, lenefilcon A, lotrfilcon A, lotrifilcon B, and balifilcon A.

4. The method of claim 1 wherein the liquid is deionized water or aqueous salt solution.

5. The method of claim 1 wherein the adequate power is about 6 W to about 32 W.

6. The method of claim 1 wherein the adequate power is about 12.0 W to about 19 W.

7. The method of claim 1 wherein the sufficient period of time is about 0.2 seconds to about 3 seconds.

8. The method of claim 1 wherein treating comprises imparting the electrical charge to the inner surface of the container from an output that is about 0.1 mm to about 5 mm from the inner surface.

9. The method of claim 1 wherein adequate power is about 12 W, the sufficient period of time is about 0.5 seconds, where the output of the electrical charge is about 3 mm from the inner surface of the bottom of the container.

## Patentansprüche

1. Verfahren zum Überprüfen einer ophthalmischen Linse (40) in einem Behälter (10), wobei die ophthalmische Linse in einer Flüssigkeit (20) eingetaucht ist, das aufweist:
Einbringen der Flüssigkeit und der ophthalmischen Linse in den Behälter; und
Überprüfen der ophthalmischen Linse;
**dadurch gekennzeichnet, dass** das Verfahren das Behandeln der Innenfläche des Behälters (10) mit einer elektrischen Entladung hinreichender Leistung über eine ausreichende Zeitdauer vor dem Einbringen der Flüssigkeit (20) oder der ophthalmischen Linse (40) in den Behälter (10) aufweist.

2. Verfahren nach Anspruch 1, bei dem die ophthalmische Linse eine weiche Kontaktlinse ist.

3. Verfahren nach Anspruch 2, bei der die Kontaktlinse aus der Gruppe bestehend aus Etafilcon A, Genfilcon A, Galifilcon A, Senofilcon A, Lenefilcon A, Lotrifilcon A, Lotrifilcon B und Balifilcon A ausgewählt ist.

4. Verfahren nach Anspruch 1, bei dem die Flüssigkeit entionisiertes Wasser oder wässrige Salzlösung ist.

5. Verfahren nach Anspruch 1, bei dem die hinreichende Leistung ungefähr 6 W bis ungefähr 32 W ist.

6. Verfahren nach Anspruch 1, bei dem die hinreichende Leistung ungefähr 12.0 W bis ungefähr 19 W ist.

7. Verfahren nach Anspruch 1, bei dem die ausreichende Zeitdauer ungefähr 0.2 Sekunden bis ungefähr 3 Sekunden ist.

8. Verfahren nach Anspruch 1, bei dem das Behandeln das Aufbringen der elektrischen Entladung auf die Innenfläche des Behälters aus einem Ausgabemittel, das ungefähr 0.1 mm bis ungefähr 5 mm von der Innenfläche entfernt ist, aufweist.

9. Verfahren nach Anspruch 1, bei dem die hinreichende Leistung ungefähr 12 W ist, die ausreichende Zeitdauer ungefähr 0.5 Sekunden ist, wobei das Ausgabemittel für die elektrische Entladung ungefähr 3 mm von der Innenfläche des Bodens des Behälters entfernt ist.

## Revendications

1. Procédé pour examiner une lentille ophtalmique (40) dans un récipient (10), dans lequel ladite lentille ophtalmique est immergée dans un liquide (20) comprenant les étapes consistant à :
✔ ajouter ledit liquide et ladite lentille ophtalmique dans le récipient ; et
✔ examiner ladite lentille ophtalmique ;
**caractérisé en ce que** le procédé comprend l'étape consistant à traiter la surface interne dudit récipient (10) avec une charge électrique de courant adéquat, pendant une période de temps suffisante avant d'ajouter ledit liquide (20) ou
ladite lentille ophtalmique (40) dans ledit récipient (10).

2. Procédé selon la revendication 1, dans lequel la lentille ophtalmique est une lentille de contact souple.

3. Procédé selon la revendication 2, dans lequel la lentille de contact est choisie dans le groupe comprenant l'etafilcon A, le genfilcon A, le galifilcon A, le senofilcon A, le lenefilcon A, le lotrifilcon A, le lotrifilcon B et le balifilcon A.

4. Procédé selon la revendication 1, dans lequel le liquide est de l'eau déionisée ou une solution saline aqueuse.

5. Procédé selon la revendication 1, dans lequel le courant adéquat est de l'ordre d'environ 6 W à environ 32 W.

6. Procédé selon la revendication 1, dans lequel le courant adéquat est de l'ordre d'environ 12,0 W à environ 19 W.

7. Procédé selon la revendication 1, dans lequel la période de temps suffisante est de l'ordre d'environ 0,2 seconde à environ 3 secondes.

8. Procédé selon la revendication 1, dans lequel l'étape de traitement comprend l'étape consistant à transmettre la charge électrique à la surface interne du récipient à partir d'une sortie qui est à environ de 0,1 mm à environ 5 mm de la surface interne.

9. Procédé selon la revendication 1, dans lequel le courant adéquat est d'environ 12 W, la période de temps suffisante est d'environ 0,5 seconde, où la sortie de la charge électrique est à environ 3 mm de la surface interne du fond du récipient.
